(19) **Europäisches Patentamt / European Patent Office / Office européen des brevets**

(11) **EP 1 472 104 B1**

(12) **FASCICULE DE BREVET EUROPEEN**

(45) Date de publication et mention de la délivrance du brevet:
**24.10.2007 Bulletin 2007/43**

(21) Numéro de dépôt: **03702534.3**

(22) Date de dépôt: **27.01.2003**

(51) Int Cl.:
**B60C 11/00** *(2006.01)*

(86) Numéro de dépôt international:
**PCT/EP2003/000779**

(87) Numéro de publication internationale:
**WO 2003/064187 (07.08.2003 Gazette 2003/32)**

(54) **SCULPTURE DE BANDE DE ROULEMENT ET METHODE DE CONSTRUCTION**

LAUFFLÄCHENPROFIL UND HERSTELLUNGSVERFAHREN

TYRE TREAD DESIGN AND THE CONSTRUCTION METHOD THEREOF

(84) Etats contractants désignés:
**AT BE BG CH CY CZ DE DK EE ES FI FR GB GR HU IE IT LI LU MC NL PT SE SI SK TR**

(30) Priorité: **31.01.2002 FR 0201179**

(43) Date de publication de la demande:
**03.11.2004 Bulletin 2004/45**

(73) Titulaires:
- **Société de Technologie Michelin**
  **63000 Clermont-Ferrand (FR)**
- **Michelin Recherche et Technique S.A.**
  **1763 Granges-Paccot (CH)**

(72) Inventeur: **SEJALON, Olivier**
**F-63400 Chamalieres (FR)**

(74) Mandataire: **Diernaz, Christian et al**
**M. F. P. Michelin,**
**SGD/LG/PI-F35-Ladoux**
**63040 Clermont-Ferrand Cedex 09 (FR)**

(56) Documents cités:
| | |
|---|---|
| **EP-A- 0 524 568** | **EP-A- 0 724 972** |
| **US-A- 2 808 867** | **US-A- 5 746 848** |

- **PATENT ABSTRACTS OF JAPAN vol. 017, no. 664 (M-1523), 8 décembre 1993 (1993-12-08) & JP 05 221206 A (SUMITOMO RUBBER IND LTD), 31 août 1993 (1993-08-31)**

**EP 1 472 104 B1**

## Description

L'invention concerne une bande de roulement destinée à équiper un pneumatique de tourisme ; elle concerne plus particulièrement une bande de roulement dont la sculpture réduit très sensiblement le bruit au roulage. Elle concerne également une méthode de définition d'une sculpture d'une bande de roulement permettant de réduire le bruit en roulage.

Afin de réduire le bruit en roulage d'un pneumatique pourvu d'une bande de roulement comportant une sculpture, il est connu de mettre en séquence, dans la direction longitudinale de cette bande, une succession de motifs dérivés d'un même motif élémentaire à un rapport d'échelle près de manière à distribuer de façon la plus homogène possible l'énergie acoustique sur un plus grand domaine de fréquences.

Il est également connu, par exemple par le document EP 114594 de construire une sculpture comportant côte à côte au moins deux répartitions annulaires formées chacune d'une pluralité de motifs répétitifs, le nombre des motifs d'une répartition annulaire située sur une moitié de la bande étant compris entre 5% et 50% du nombre de motifs d'une autre répartition annulaire située sur l'autre moitié de la même bande.

Cette dernière technique de construction, si elle permet en moyenne d'améliorer la perception subjective des occupants d'un véhicule au cours du roulage, conduit dans un certain nombre de cas à des résultats qualitatifs relativement mauvais en bruit intérieur au véhicule. Il était donc nécessaire de déterminer des règles complémentaires d'optimisation à la construction d'une sculpture de pneumatique et en particulier de pneumatique pour véhicule de tourisme.

Par ailleurs, les documents EP 524568 et US 2,808,867 proposent tous les deux des sculptures comprenant plusieurs répartitions sans toutefois énoncer de règles de construction précises des différentes répartitions permettant d'optimiser les performances des sculptures.

L'invention ici décrite se propose de fournir une méthode de construction de sculpture de pneumatique ayant au moins deux répartitions différentes dans le but de réduire les gênes acoustiques perçues à l'intérieur d'un véhicule.

Conformément à l'invention, la bande de roulement de largeur L pour pneumatique comporte une sculpture formée d'une pluralité de groupes de motifs, ces groupes formant dans le sens transversal de la bande un nombre de répartitions M au moins égal à deux répartitions annulaires de groupes de motifs d'indice (i) et (j) différentes et de largeur moyenne Li, Lj, la somme de ces largeurs Li, Lj étant au moins égale à 80% de la largeur L de la bande, chaque répartition annulaire de groupes de motifs étant formée par une succession d'une pluralité de groupes de motifs, chaque groupe étant dérivé d'un même groupe de motifs élémentaires, au moins deux desdits groupes de motifs de la répartition considérée ayant des longueurs longitudinales différentes et le rapport Ri entre la longueur longitudinale du plus petit groupe de motifs au plus grand groupe de motifs de ladite répartition étant strictement inférieur à l'unité, cette bande étant caractérisée en ce que pour au moins deux répartitions annulaires comprenant respectivement Ni et Nj motifs, Ni étant strictement inférieur à Nj, les relations suivantes sont satisfaites :

$$0.20 \leq T_{ij} \leq 0.50$$

$$0.60 \leq R_{pg} \leq 0.66,$$

où Tij désignant un "taux de recouvrement" entre lesdites au moins deux répartitions considérées prises deux à deux est obtenu par la formule suivante :

$$T_{ij} = \frac{\left[ \dfrac{Ni}{Ri} - Nj.Rj \right]}{\left[ \dfrac{Nj}{Rj} - Ni.Ri \right]},$$

et où $R_{pg}$ , désignant un "rapport de pas global estimé" entre toutes les M répartitions, est obtenu par la formule suivante :

$$R_{pg} = \sqrt{\frac{Min_{i=1}^{M}\left(N_i R_i\right)}{Max_{i=1}^{M}\left(N_i \middle/ R_i\right)}} .$$

Dans le cas d'une seule répartition (M=1), on note que le rapport de pas global estimé serait égal au rapport de pas.

La bande de roulement selon l'invention permet d'éviter l'existence d'une émergence dans le spectre d'émission acoustique pouvant résulter d'une interaction trop forte entre les répartitions annulaires ; cette bande permet également d'éviter l'apparition de paquets isolés d'énergie acoustique résultant d'une interaction insuffisante entre les répartitions.

Dès lors que le taux de recouvrement Tij est supérieur à 0.5, on constate la présence, dans le spectre d'émission acoustique, d'une zone fréquentielle plus énergétique que les autres susceptible de conduire à l'apparition d'une gêne pour les passagers d'un véhicule, cette gêne étant liée à un bruit de sirènement ou de battement.

Quand le taux de recouvrement Tij est inférieur à 0.20, on observe que l'énergie acoustique est distribuée dans le spectre des fréquences par paquets isolés et dans ces conditions, le bruit causé par les pneumatiques ne se fond plus dans l'environnement acoustique de l'habitacle ; il apparaît un bruit de battement dans le véhicule.

Le domaine de valeurs proposées pour le rapport de pas global estimé $R_{pg}$ permet d'éviter l'existence d'énergie acoustique en basses fréquences qui correspond à un domaine où le filtrage des véhicules est le moins efficace. Ce domaine permet également d'éviter de trop grands écarts de rigidité de sculpture afin de garantir un fonctionnement correct du pneumatique.

Préférentiellement, lorsque la sculpture d'une bande de roulement comprend seulement deux répartitions annulaires des groupes de motifs, l'effet d'interaction est optimal dès lors que le taux de recouvrement Tij est compris entre 0.30 et 0.42 tout en conservant un rapport de pas global compris entre 0.6 et 0.66.

Lorsque la sculpture d'une bande de roulement comprend plus de deux répartitions annulaires, il est avantageux que la répartition comprenant le plus grand nombre de groupes de motifs et la répartition comprenant le plus petit nombre de groupes de motifs aient un taux de recouvrement compris entre 0.20 et 0.38 avec un rapport de pas global estimé $R_{pg}$ compris entre 0.6 et 0.63.

Avantageusement, et quel que soit le nombre de répartitions, le rapport Ri de chaque répartition satisfait la relation suivante :

$$0.5 \le Ri \le 0.8$$

Si la valeur du rapport Ri d'une répartition est supérieure à 0.8, la distribution de l'énergie acoustique de ladite répartition se fait sur un nombre limité de fréquences et peut conduire à une gêne dans l'habitacle de type sirènement.

Si la valeur du rapport Ri est inférieure à 0.5, il est très difficile de trouver un équilibre satisfaisant entre les répartitions.

Préférentiellement, les différentes répartitions annulaires ont un taux de creux, c'est-à-dire un rapport entre la surface totale de la bande diminuée de la surface de contact réelle à la surface totale de la bande, compris entre 0.15 et 0.45.

Préférentiellement, les écarts entre les taux de creux des répartitions annulaires d'une même bande sont au maximum de 0.10. Cette condition permet de limiter les dissymétries entre les répartitions annulaires qui peuvent conduire à des difficultés de réglage de l'équilibre des performances. En outre et même si elle n'est pas totalement suffisante, cette condition permet de garantir une relative égalité des contributions de chaque répartition annulaire au bruit global de la sculpture et donc de favoriser une répartition homogène de l'énergie dans le spectre de rayonnement acoustique, ce qui permet au bruit du pneumatique de mieux se fondre dans l'environnement acoustique de l'habitacle.

L'invention propose également une méthode de réduction du bruit en roulage d'un pneumatique pourvu d'une bande de roulement de largeur L et ayant une sculpture formée d'une pluralité de motifs de sculpture par optimisation de l'effet d'interaction des répartitions de sculpture de ladite bande. La méthode selon l'invention comprend les étapes suivantes pour une sculpture formée de deux répartitions :

A - création/formation d'une première répartition annulaire à partir d'au moins deux groupes de motifs de longueurs moyennes différentes, cette répartition comprenant Ni groupes, le rapport entre la longueur la plus petite et la longueur la plus grande dans la direction longitudinale étant égale à Ri ;

B - création d'une deuxième répartition annulaire à partir d'au moins deux groupes de motifs de longueurs moyennes différentes ; cette répartition comprenant Nj groupes, le rapport entre la longueur la plus petite et la longueur la plus grande dans la direction longitudinale étant égale à Rj ;

C - calcul des valeurs du taux de recouvrement Tij et du rapport de pas global estimé $R_{pg}$ à partir des valeurs Ni, Ri, Nj, Rj à partir des formules suivantes:

$$Tij = \frac{\left[\dfrac{Ni}{Ri} - Nj.Rj\right]}{\left[\dfrac{Nj}{Rj} - Ni.Ri\right]}$$

$$R_{pg} = \sqrt{\frac{Min_{i=1}^{2}\left(N_i R_i\right)}{Max_{i=1}^{2}\left(N_i\big/R_i\right)}}$$

D - comparaison de la valeur calculée de Tij avec une valeur souhaitée comprise entre 0.20 et 0.50 et comparaison de la valeur calculée de $R_{pg}$ avec une valeur souhaitée comprise entre 0.6 et 0.66 ;

E - si la valeur calculée de Tij n'est pas comprise entre 0.20 et 0.50 ou si la valeur calculée de $R_{pg}$ n'est pas comprise entre 0.60 et 0.66, modification d'au moins une valeur parmi les valeurs suivantes : Ni, Nj, Ri, Rj et reprise des étapes C et D jusqu'à satisfaire les relations suivantes : $0.20 \le Tij \le 0.50$ et $0.60 \le R_{pg} \le 0.66$.

Cette méthode de réduction du bruit de roulage d'un pneumatique est particulièrement intéressante car elle libère des degrés de liberté pour le réglage de l'équilibre des performances en roulage de ce pneumatique.

Cette méthode peut, bien entendu, s'appliquer au traitement de plus de deux répartitions, par exemple en s'assurant que prises deux à deux dans l'ordre de croissance du nombre de motifs desdites répartitions annulaires, les taux de recouvrement de ces répartitions sont effectivement compris entre 0.20 et 0.50 et préférentiellement entre 0.30 et 0.42, et qu'en outre que le rapport de pas global estimé $R_{pg}$ est compris entre 0.6 et 0.66.

Si on ordonne les répartitions par leur nombre respectif de motifs N1, N2, N3 en ordre croissant (N3 plus grand que N2 lui même plus grand que N1), une autre façon d'appliquer la méthode selon l'invention consiste à déterminer les paramètres suivants : nombre de groupes de motifs et rapport du plus petit au plus grand groupe pour tous les couples de répartitions correspondant aux nombres de motifs (N1, N2) et (N2, N3) afin que les taux de recouvrement de chacun de ces couples soient compris entre 0.20 et 0.50 et préférentiellement entre 0.30 et 0.42. Dans ce cas, il faut aussi que le rapport de pas global estimé $R_{pg}$ soit compris entré 0.6 et 0.66.

D'autres caractéristiques et avantages de l'invention ressortent de la description faite ci-après en référence aux figures montrant, à titre d'exemple non limitatif, une sculpture pour pneumatique conforme à l'invention et selon lesquelles :

- la figure 1 représente une vue de la surface d'une nouvelle sculpture construite selon l'invention ;

- la figure 2 montre la distribution théorique de l'énergie acoustique de chaque répartition annulaire pour la sculpture de la figure 1 ;

- la figure 3 montre les spectres de rayonnement acoustique mesurés pour trois sculptures différentes, l'une de ces sculptures correspondant à la sculpture selon l'invention montrée à la figure 1.

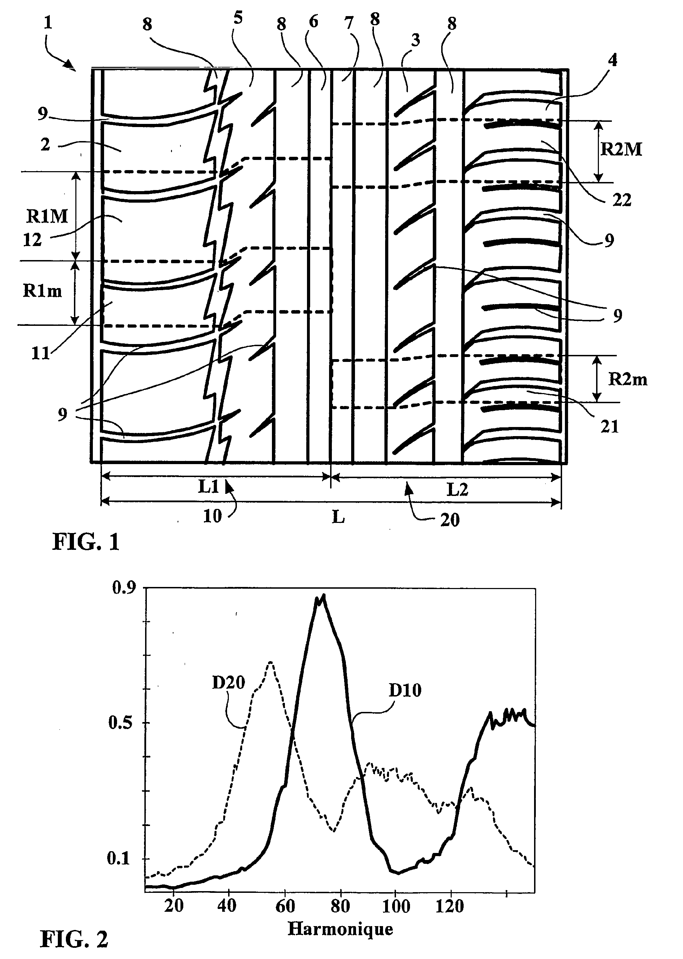

La figure 1 montre une vue partielle (dans le sens longitudinal) de la surface d'une sculpture d'une bande de roulement 1 selon l'invention ; sur cette figure 1, les contours en traits pleins correspondent aux limites des motifs de relief 2, 3, 4, 5, 6, 7 sur la surface de contact de la bande à l'état neuf.

Cette sculpture est formée de deux répartitions annulaires formées chacune d'une pluralité de groupes de motifs de relief 11, 12, 21, 22.

Une première répartition annulaire 10 occupe une largeur axiale L1 sensiblement égale à la moitié de la largeur L de la bande de roulement. Cette première répartition annulaire 10 est composée de N1 (égal ici à 55) groupes de motifs de reliefs 11, 12, lesdits motifs étant délimités par des rainures transversales 9 ou axiales et des rainures longitudinales 8. La première répartition 10 comprend des groupes 12 de longueur maximale R1M égale à 43.545 mm et des groupes 11 de longueur minimale R1m égale à 30.917 mm (ce qui donne un rapport de pas R1=R1m/R1M égal à 0.71). Des groupes de motifs de longueur intermédiaires égale à 36.16 mm sont également prévus. Le taux de creux de la première répartition 10 (correspondant au rapport de la surface de la bande qui n'est pas en contact avec le sol à la surface totale) est ici égal à 29% pour chaque groupe de motifs.

Une seconde répartition annulaire 20 occupe une largeur axiale L2 sensiblement égale à la moitié de la largeur L de la bande de roulement. Cette seconde répartition annulaire est composée de N2 (égal ici à 75) groupes de motifs de reliefs 21, 22, lesdits motifs étant délimités par des rainures transversales 9 ou axiales et des rainures longitudinales 8. La seconde répartition 20 comprend des groupes 22 de longueur maximale R2M égale à 30.797 mm et des groupes 21 de longueur minimale R2m égale à 23.098 mm (ce qui donne un rapport de pas R2=R2m/R2M égal à 0.75). Des groupes de motifs de longueur intermédiaire égale à 26.398 mm sont également prévus. Le taux de creux de cette seconde répartition 20 (correspondant au rapport de la surface de la bande qui n'est pas en contact avec le sol à la surface totale) est ici égal à 39% pour chaque groupe de motifs.

Compte tenu des valeurs choisies pour les deux répartitions annulaires 10 et 20, cette sculpture a un taux de recouvrement Tij égal à 0.35 et un rapport de pas global estimé $R_{pg}$ égal à 0.625

Avec une telle configuration, la distribution théorique de l'énergie acoustique dans le spectre de rayonnement acoustique est relativement uniforme comme cela est visible sur la figure 2. Sur cette figure 2 représentant un graphique portant en abscisse le rang harmonique et en ordonnée l'amplitude relative d'énergie émise, on a porté les distributions théoriques d'énergie pour chaque répartition annulaire de la sculpture montrée à la figure 1 (la distribution D10, en trait plein, correspond à la répartition 10 et la distribution D20, en traits pointillés, correspond à la répartition 20).

Il a été constaté en outre que la répartition présentant le taux de creux le plus faible contribue le moins à la distribution totale de l'énergie et qu'il était préférable que l'écart de taux de creux entre les répartitions annulaires soit inférieur à 10% afin de garantir une répartition homogène de l'énergie dans le spectre de rayonnement acoustique, ce qui permet au bruit du pneumatique de mieux se fondre dans l'environnement acoustique de l'habitacle.Pour avoir un bon comportement sur sol sec d'un véhicule équipé avec des pneumatiques pourvus d'une sculpture selon l'invention, il est avantageux que la première répartition soit placée côté extérieur par rapport audit véhicule.

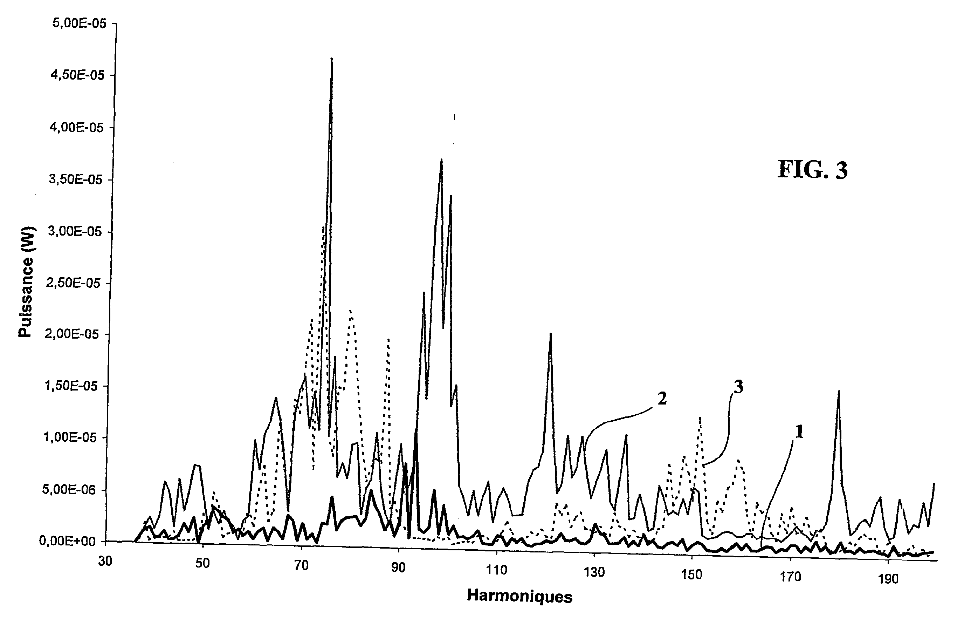

La figure 3 montre les résultats de mesures de puissance acoustique rayonnée par trois pneumatiques P1, P2, P3 de dimension 225/40 R 18 appartenant au segment Sport :

- le pneumatique P1 est pourvu d'une bande roulement selon l'invention et dont le dessin de sculpture est montré à la figure 1 (la représentation de son spectre est en trait noir dense, repérée par la référence 1) ;

- le pneumatique P2 est pourvu d'une sculpture comportant deux répartitions annulaires, l'une comportant 45 groupes de motifs ayant un rapport de pas égal à 0.8, l'autre comportant 68 groupes et ayant un rapport de pas de 0.81. Le taux de recouvrement $T_{ij}$ est alors égal à 0.02 et le rapport de pas global estimé $R_{pg}$ est égal à 0.655 (la représentation de son spectre est en trait gris, repérée par la référence 2) ;

- le pneumatique P3 correspond à un pneumatique usuel et est doté d'une sculpture mono répartition comportant 72 groupes de motifs et ayant un rapport de pas de 0.71 dont on a optimisé la distribution des motifs de relief de manière à réduire de façon sensible l'énergie acoustique selon des méthodes connues de la personne du métier et rappelées en introduction. En prenant $N_1 = N_2$ et $R_1 = R_2$ cette sculpture a un taux de recouvrement égal à l'unité et un rapport de pas global estimé égal au rapport de pas c'est à dire 0.71 (la représentation de son spectre est en traits pointillés, repérée par la référence 3).

Ces trois pneumatiques ont été mesurés en chambre semi anéchoïde dans les conditions suivantes : charge : 412 daN, pression : 2.5 bars, vitesse : 80 km/h.
On constate que le spectre de la sculpture conforme à l'invention P1 est situé très sensiblement au-dessous du niveau des spectres des deux autres pneumatiques P2 et P3.
De plus, le spectre du pneumatique (P1) ne présente ni émergence ni paquets isolés d'énergie acoustique contrairement au spectre du pneumatique P2 où l'énergie est répartie en 4 paquets distincts : l'un premier en dessous de l'harmonique 50 Hz, un deuxième autour de l'harmonique 75 Hz, un troisième autour de l'harmonique 100 Hz et le dernier autour de l'harmonique 130 Hz.
L'invention n'est bien sûr pas limitée au seul exemple décrit et diverses modifications peuvent y être apportées par la personne du métier en faisant appel à ses connaissances.

**Revendications**

1. Bande de roulement (1) de largeur L pour pneumatique comportant une sculpture formée de groupes de motifs (11, 12, 21, 22) disposés, dans le sens transversal, selon un nombre M de répartition différentes (10, 20) au moins égal à deux, ces répartitions ayant pour largeur moyenne Li, Lj, la somme desdites largeurs Li, Lj étant au moins égale à 80% de la largeur L de la bande, chaque répartition de groupes de motifs étant formée par une succession d'une pluralité de groupes, chaque groupe étant dérivé d'un même groupe de motifs élémentaires, au moins deux desdits groupes de motifs de la répartition considérée ayant des longueurs longitudinales différentes, le rapport Ri entre la longueur longitudinale du plus petit groupe de motifs à celle du plus grand groupe de motifs étant strictement inférieur à l'unité, cette bande (1) étant **caractérisée en ce que**, pour au moins deux répartitions (10, 20) comprenant respectivement Ni et Nj motifs, avec Ni < Nj, les relations suivantes sont satisfaites :

$$0.20 \leq T_{ij} \leq 0.50,$$

$$0.60 \leq R_{pg} \leq 0.66$$

où Tij, désignant un taux de recouvrement entre lesdites deux répartitions, est calculé par la formule suivante :

$$T_{ij} = \frac{\left[\dfrac{Ni}{Ri} - Nj.Rj\right]}{\left[\dfrac{Nj}{Rj} - Ni.Ri\right]},$$

et où $R_{pg}$, désignant un "rapport de pas global estimé" entre toutes les M répartitions est obtenu par la formule suivante :

$$R_{pg} = \sqrt{\frac{Min_{i=1}^{M}(N_i R_i)}{Max_{i=1}^{M}\left(N_i \big/ R_i\right)}}.$$

2. Bande de roulement selon la revendication 1 **caractérisée en ce que** la répartition comprenant le plus grand nombre de groupes de motifs et la répartition comprenant le plus petit nombre de groupes de motifs ont un taux de recouvrement au moins égal à 0.20 et au plus égal à 0.50, et un rapport de pas global estimé $R_{pg}$ au moins égal à 0.6 et au plus égal à 0.66

3. Bande de roulement selon la revendication 1 **caractérisée en ce que** le nombre M est égal à deux répartitions et **en ce que** la relation suivante est satisfaite :

$$0.30 \leq T_{12} \leq 0.42.$$

**4.** Bande de roulement selon la revendication 1 ayant un nombre M de répartitions supérieur à deux et **caractérisée en ce que** la répartition comprenant le plus grand nombre de groupes de motifs et la répartition comprenant le plus petit nombre de groupes de motifs ont un taux de recouvrement au moins égal à 0.20 et au plus égal à 0.38 avec un rapport de pas global estimé compris entre 0.6 et 0.63.

**5.** Bande de roulement selon la revendication 1 **caractérisée en ce que** toutes les répartitions prises deux à deux dans l'ordre de croissance du nombre de motifs desdites répartitions satisfont les relations : $0.30 \leq T_{12} \leq 0.42$ et $0.60 \leq R_{pg} \leq 0.66$.

**6.** Bande de roulement selon l'une des revendications 1 à 5 **caractérisée en ce que** chaque groupe de motifs a un taux de creux, défini comme le rapport de la surface des creux à la surface totale de ce groupe, différent de zéro et **en ce que** les écarts entre les taux de creux de chaque répartition sont au maximum égaux à 0.10.

**7.** Bande de roulement selon l'une des revendications 1 à 6 **caractérisée en ce que** le rapport Ri de chaque répartition est tel que :

$$0.5 \leq Ri \leq 0.8$$

**8.** Méthode d'optimisation et de réduction du bruit en roulage d'un pneumatique pourvu d'une bande de roulement ayant une sculpture formée d'une pluralité de motifs de sculpture, cette méthode comprenant les étapes suivantes :

A - formation d'une première répartition à partir d'au moins deux groupes de motifs de longueurs différentes, cette répartition comprenant Ni groupes, le rapport entre la longueur la plus petite et la longueur la plus grande dans la direction longitudinale étant égale à Ri ;

B - création d'une deuxième répartition à partir d'au moins deux groupes de motifs de longueurs différentes ; cette répartition comprenant Nj groupes, le rapport entre la longueur la plus petite et la longueur la plus grande dans la direction longitudinale étant égale à Rj ;

C - calcul de la valeur d'un taux de recouvrement Tij et du rapport de pas global estimé $R_{pg}$ à partir des valeurs Ni, Ri, Nj, Rj en utilisant les formules suivantes :

$$T_{ij} = \left| \frac{\left[\dfrac{Ni}{Ri} - Nj.Rj\right]}{\left[\dfrac{Nj}{Rj} - Ni.Ri\right]} \right|$$

$$R_{pg} = \sqrt{\frac{Min_{i=1}^{2}\left(N_{i}R_{i}\right)}{Max_{i=1}^{2}\left(N_{i}\!\big/\!R_{i}\right)}}$$

D - comparaison de la valeur calculée de Tij avec une valeur souhaitée comprise entre 0.20 et 0.50 et comparaison de la valeur calculée de $R_{pg}$ avec une valeur souhaitée comprise entre 0.6 et 0.66 ;

E - si cette valeur calculée de Tij n'est pas comprise entre 0.20 et 0.50 ou si la valeur calculée de $R_{pg}$ n'est pas comprise entre 0.6 et 0.66, modification d'au moins une valeur choisie parmi les valeurs de Ni, Nj, Ri, Rj et reprise des étapes C et D jusqu'à satisfaire les relations suivantes : $0.20 \leq T_{ij} \leq 0.50$ et $0.60 \leq R_{pg} \leq 0.66$.

**Claims**

**1.** A tyre tread (1) of width L, comprising a tread pattern formed of groups of motifs (11, 12, 21, 22) arranged, in the transverse direction, in a number M of different distributions (10, 20) at least equal to two, these distributions having the average width Li, Lj, the total of said widths Li, Lj being at least equal to 80% of the width L of the tread, each distribution of groups of motifs being formed by a succession of a plurality of groups, each group being derived from one and the same group of elementary motifs, at least two of said groups of motifs of the distribution in question having different longitudinal lengths, the ratio Ri between the longitudinal length of the smallest group of motifs and that of the largest group of motifs being strictly less than one, this tread (1) being **characterised in that**, for at least two distributions (10, 20) comprising respectively Ni and Nj motifs, with Ni < Nj, the following relationships are satisfied:

$$0.20 \leq T_{ij} \leq 0.50,$$

$$0.60 \leq R_{pg} \leq 0.66$$

where Tij, which designates an amount of overlap between said two distributions, is calculated by the following formula:

$$T_{ij} = \frac{\left[\dfrac{Ni}{Ri} - Nj.Rj\right]}{\left[\dfrac{Nj}{Rj} - Ni.Ri\right]},$$

and where $R_{pg}$, which designates an "estimated overall pitch ratio" between all the M distributions, is obtained by the following formula:

$$R_{pg} = \sqrt{\frac{Min_{i=1}^{M}(N_i R_i)}{Max_{i=1}^{M}\left(N_i \middle/ R_i\right)}}.$$

**2.** A tread according to Claim 1, **characterised in that** the distribution comprising the largest number of groups of motifs and the distribution comprising the smallest number of groups of motifs have an amount of overlap of at least 0.20 and at most 0.50, and an estimated overall pitch ratio $R_{pg}$ of at least 0.6 and at most 0.66.

**3.** A tread according to Claim 1, **characterised in that** the number M is equal to two distributions and **in that** the following relationship is satisfied:

$$0.30 \leq T_{12} \leq 0.42.$$

**4.** A tread according to Claim 1, having a number M of distributions greater than two and **characterised in that** the distribution comprising the largest number of groups of motifs and the distribution comprising the smallest number of groups of motifs have an amount of overlap at least equal to 0.20 and at most equal to 0.38 with an estimated overall pitch ratio of between 0.6 and 0.63.

**5.** A tread according to Claim 1, **characterised in that** all the distributions taken two by two in the order of increase of the number of motifs of said distributions satisfy the relationships: $0.30 \leq T_{12} \leq 0.42$ and $0.60 \leq R_{pg} \leq 0.66$.

**6.** A tread according to one of Claims 1 to 5, **characterised in that** each group of motifs has a groove ratio, defined as the ratio of the surface of the grooves to the total surface of this group, which is other than zero and **in that** the differences between the groove ratios of each distribution are at most equal to 0.10.

**7.** A tread according to one of Claims 1 to 6, **characterised in that** the ratio Ri of each distribution is such that:

$$0.5 \leq \mathbf{Ri} \leq 0.8$$

**8.** A method for optimising and reducing the running noise of a tyre provided with a tread having a tread pattern formed of a plurality of tread pattern motifs, this method comprising the following stages:

A - formation of a first distribution from at least two groups of motifs of different lengths, this distribution comprising Ni groups, the ratio between the shortest length and the longest length in the longitudinal direction being equal to Ri;
B - creation of a second distribution from at least two groups of motifs of different lengths, this distribution comprising Nj groups, the ratio between the shortest length and the longest length in the longitudinal direction being equal to Rj;
C - calculation of the value of an amount of overlap Tij and of the estimated overall pitch ratio $R_{pg}$ from the values Ni, Ri, Nj, Rj using the following formulae:

$$T_{ij} = \frac{\left[\dfrac{Ni}{Ri} - Nj.Rj\right]}{\left[\dfrac{Nj}{Rj} - Ni.Ri\right]}$$

$$R_{pg} = \sqrt{\frac{Min_{i=1}^{2}(N_i R_i)}{Max_{i=1}^{2}\left(N_i \middle/ R_i\right)}}.$$

D - comparison of the calculated value of Tij with a desired value of between 0.20 and 0.50 and comparison of the calculated value of $R_{pg}$ with a desired value of between 0.6 and 0.66;
E - if this calculated value of Tij is not between 0.20 and 0.50 or if the calculated value of $R_{pg}$ is not between 0.60 and 0.66, modification of at least one value selected from among the values of Ni, Nj, Ri, Rj and resumption of stages C and D until the following relationships are satisfied: $0.20 \leq T_{ij} \leq 0.50$ and $0.60 \leq R_{pg} \leq 0.66$.

**Patentansprüche**

1. Laufstreifen (1) der Breite L für Luftreifen, der ein Profil aufweist, das aus Mustergruppen (11, 12, 21, 22) aufgebaut ist, die in Querrichtung entsprechend einer Zahl M von zumindest zwei verschiedenen Unterteilungen (10, 20) angeordnet sind, wobei diese Unterteilungen die mittlere Breite Li, Lj haben, die Summe der genannten Breiten Li, Lj zumindest gleich 80 % der Breite L des Laufstreifen beträgt, jede Unterteilung der Mustergruppen durch eine Aneinanderreihung einer Vielzahl von Gruppen gebildet ist, jede Gruppe von der gleichen Gruppe von zugrundeliegenden Mustern abgeleitet ist, zumindest zwei der genannten Mustergruppen der betrachteten Unterteilung in Längsrichtung unterschiedliche Längen aufweisen, das Verhältnis Ri der Länge der kleinsten Mustergruppe in Längsrichtung und der größten Mustergruppe immer kleiner als eins ist, wobei der Laufstreifen (1) **dadurch gekennzeichnet ist, dass** für zumindest zwei Unterteilungen (10, 20), die Ni bzw. Nj Muster aufweisen, mit Ni < Nj die folgenden Beziehungen erfüllt sind:

$$0,20 \leq T_{ij} \leq 0,50,$$

$$0,60 \leq R_{pg} \leq 0,66$$

wobei Tij, das ein Überdeckungsverhältnis zwischen den genannten beiden Unterteilungen angibt, gemäß der folgenden Formel berechnet wird:

$$T_{ij} = \frac{\left[\dfrac{Ni}{Ri} - Nj.Rj\right]}{\left[\dfrac{Nj}{Rj} - Ni.Ri\right]},$$

und wobei $R_{pg}$, das ein "berechnetes Gesamthöhenverhältnis" aller M Unterteilungen angibt, nach der folgenden Formel erhalten wird:

$$R_{pg} = \sqrt{\frac{Min_{l=1}^{M}(N_l R_l)}{Max_{l=1}^{M}\left(N_l/R_l\right)}}.$$

2. Laufstreifen nach Anspruch 1, **dadurch gekennzeichnet, dass** die Unterteilung, die die größere Anzahl von Mustergruppen umfasst, und die Unterteilung, die die kleinste Anzahl von Mustergruppen umfasst, ein Überdeckungsverhältnis zueinander von mindestens 0,20 und höchstens 0,50 und ein berechnetes Gesamthöhenverhältnis $R_{pg}$ von zumindest 0,6 und höchstens 0,66 aufweisen.

3. Laufstreifen gemäß Anspruch 1, **dadurch gekennzeichnet, dass** die Anzahl M zwei Unterteilungen beträgt, und dadurch, dass die folgende Beziehung erfüllt ist:

$$0,30 \leq T_{12} \leq 0,42.$$

4. Laufstreifen nach Anspruch 1, der eine Zahl M von Unterteilungen größer zwei aufweist und **dadurch gekennzeichnet ist, dass** die Unterteilung, die die größere Anzahl von Mustergruppen umfasst, und die Unterteilung, die die kleinste Anzahl von Mustergruppen umfasst, ein Überdeckungsverhältnis von mindestens 0,20 und höchstens 0,38 und ein berechnetes Gesamthöhenverhältnis im Bereich von 0,6 bis 0,63 aufweisen.

5. Laufstreifen nach Anspruch 1, **dadurch gekennzeichnet, dass** alle Unterteilungen paarweise in der Reihenfolge der steigenden Anzahl von Mustern die folgenden Beziehungen erfüllen: $0,30 \leq T_{12} \leq 0,42$ und $0,60 \leq R_{pg} \leq 0,66$.

6. Laufstreifen nach einem der Ansprüche 1 bis 5, **dadurch gekennzeichnet, dass** jede Mustergruppe ein Vertiefungsverhältnis, das als das Verhältnis der Oberfläche der Vertiefungen und der Gesamtoberfläche dieser Gruppe definiert ist, ungleich Null aufweist, und dadurch, dass die Unterschiede zwischen den Vertiefungsverhältnissen jeder Unterteilung maximal gleich 0,10 sind.

7. Laufstreifen nach einem der Ansprüche 1 bis 6, **dadurch gekennzeichnet, dass** das Verhältnis Ri jeder Unterteilung so ist, dass gilt:

$$0,5 \leq Ri \leq 0,8.$$

8. Verfahren zur Optimierung und Verringerung des Abrollgeräusches eines Luftreifens, der mit einem Laufstreifen versehen ist, der ein Profil aufweist, das aus einer Vielzahl von Profilmustern gebildet ist, wobei das Verfahren die folgenden Schritte umfasst:

   A - Bildung einer ersten Unterteilung von zumindest zwei Mustergruppen unterschiedlicher Länge, wobei diese Unterteilung Ni Gruppen umfasst, und das Verhältnis der kleinsten Länge und der größten Länge in Längsrichtung gleich Ri ist;

B - Erstellung einer zweiten Unterteilung von zumindest zwei Mustergruppen unterschiedlicher Länge; wobei diese Unterteilung Nj Gruppen umfasst, und das Verhältnis der kleinsten Länge und der größten Länge in Längsrichtung gleich Rj ist;

C - Berechnung des Wertes des Überdeckungsverhältnisses Tij und des berechneten Gesamthöhenverhältnisses $R_{pg}$ aus den Werten Ni, Ri, Nj, Rj unter Verwendung der folgenden Formeln:

$$T_{ij} = \frac{\left[\dfrac{Ni}{Ri} - Nj.Rj\right]}{\left[\dfrac{Nj}{Rj} - Ni.Ri\right]}$$

$$R_{pg} = \sqrt{\frac{Min_{I=1}^{2}(N_I R_I)}{Max_{I=1}^{2}\left(N_I \big/ R_I\right)}}$$

D - Vergleich der berechneten Werte von Tij mit einem gewünschten Wert im Bereich von 0,20 bis 0,50 und Vergleich des berechneten Wertes von $R_{pg}$ mit einem gewünschten Wert im Bereich von 0,6 bis 0,66;

E - wenn der berechnete Wert von Tij nicht im Bereich von 0,20 bis 0,50 liegt oder wenn der berechnete Wert von $R_{pg}$ nicht im Bereich von 0,6 bis 0,66 liegt, Veränderung zumindest eines Wertes, der unter den Werten Ni, Nj, Ri, Rj ausgewählt ist, und Wiederholung der Schritte C und D bis die folgenden Beziehungen erfüllt sind:

$0,20 \leq T_{ij} \leq 0,50$ und $0,60 \leq R_{pg} \leq 0,66$.

**FIG. 1**

**FIG. 2**

FIG. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 114594 A
- EP 524568 A
- US 2808867 A